# EUROPEAN PATENT SPECIFICATION

(11) **EP 3 572 751 B1**
(45) Date of publication and mention of the grant of the patent: **24.05.2023**
(21) Application number: 18722716.0
(22) Date of filing: 23.01.2018
(51) Int. Cl.: F28D 7/16, F28D 21/00, F28F 9/00, F28F 9/22

(54) **HEAT EXCHANGER FOR GASES**
WÄRMETAUSCHER FÜR GASE
ÉCHANGEUR DE CHALEUR POUR GAZ

(43) Date of publication of application: 27.11.2019
(73) Proprietor: Valeo Termico S.A., 50011 Saragosse (ES)
(72) Inventor: TOLOSA ECHARRI, Inigo, 50011 Zaragoza (ES); PENA SANCHEZ, Dario, 50011 Zaragoza (ES); IGUAZ PIEDRAFITA, Javier, 50011 Zaragoza (ES); PUERTOLAS SANCHEZ, Fernando, 50011 Zaragoza (ES)
(74) Representative: Valeo Systèmes Thermiques
(86) International application number: PCT/IB2018/000284
(87) International publication number: WO 2018/134687

(56) References cited:
- EP-A1- 1 548 267
- EP-A1- 2 765 384
- WO-A1-2015/190635
- DE-A1-102014 212 242
- US-A- 3 532 160
- US-A1- 2015 027 673

## Description

The present invention relates in general to a heat exchanger for gases, in particular for engine exhaust gases, comprising a tube bundle located within a housing, and more particularly a heat exchanger in which the tube bundle is located excentrically with respect to the longitudinal central geometrical axis of the housing, and the external perimeter of which is positioned so as to prevent the formation of channels for the passage of cooling fluid between the tubes and the housing.

### Background to the invention

Heat exchangers for gases comprising the elements described in the precharacterizing clause of claim 1 of the present invention are known. Such a heat exchanger is disclosed in Document DE 10 2014 212242 A1.

In these exchangers a sufficient flow of cooling fluid within them is essential in order to avoid boiling phenomena which might compromise the strength and performance of the exchanger.

The main factors affecting the flow of cooling fluid are: a) the locations of the inlet and outlet for the cooling fluid, and b) the arrangement of the tubes within the housing of the exchanger, which in particular do not completely fill the interior of the housing, as a result of which undesired channels are created for the passage of cooling fluid, with the result that only a portion of the cooling fluid actually passes between the tubes, and as a consequence the cooling capacity is reduced.

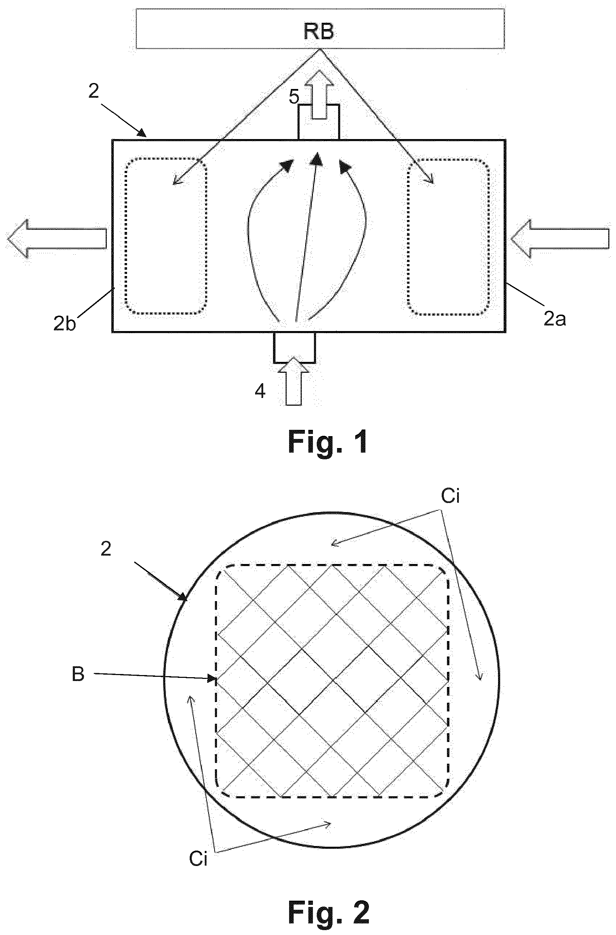

Sometimes external design limitations make it necessary to adopt incorrect configurations for factors a) and b) mentioned, such as for example:
- The configuration illustrated in Figure 1, that is to say with the inlet 4 and outlet 5 for cooling fluid being far from the ends 2a for the entry and 2b for the exit of gases, which as illustrated in Figure 1 causes the cooling fluid to travel directly from inlet 4 to outlet 5 for cooling fluid via the interior of housing 2 without adequately cooling the regions close to ends 2a for the entry and 2b for the exit of gases, as a result of which these regions, indicated as RB in Figure 1, are regions where conditions for the circulation of cooling fluid are poor, as a result of which they are poorly cooled.
- The configuration illustrated in Figure 2, where the tubes of the tube bundle (diagrammatically illustrated by means of hatched lines bounded by a dashed line and indicated by reference B) are located within housing 2 in such a way that they are at a distance from the inner wall of housing 2, giving rise to undesired channels Ci for flow of the cooling fluid. Thus only some of the cooling fluid flows between the tubes of the tube bundle and as a consequence cooling capacity is reduced.

Heat exchangers for gases which are intended to solve the problems associated with the configuration associated with at least previously mentioned factor a) are known. This is the case for the exchanger described in patent document ES2394406A1 which describes a heat exchanger for gases comprising a housing with diversion means located within it, which includes a series of transverse deflectors and one longitudinal deflector in order to direct the flow of cooling fluid in a more advantageous manner, including counter-currently with respect to the circulation of the flow of gases, thus also cooling the regions close to the ends for the entry/exit of gases.

Although cited document ES2394406A1 does not illustrate the tube bundle, it can be inferred from the non-excentric distribution of the openings passing through the supporting plates illustrated in Figure 1, which are intended to receive the corresponding ends of the tubes of the tube bundle, that the tube bundle is also distributed in a non-excentric manner with respect to the central geometric axis of the housing, the tubes being located on both sides of the longitudinal deflector of the diversion means, including immediately opposite the inlet for cooling fluid.

This arrangement of tubes opposite the inlet for cooling fluid has a prejudicial effect on the good circulation of cooling fluid throughout the remainder of the tubes, across the longitudinal deflector, as it partly blocks that circulation.

The heat exchangers known in the state of the art all suffer from some or all of the inconveniences associated with factor b) mentioned above, as to a greater or lesser extent they have undesired channels for the passage of cooling fluid.

There therefore appears to be a need for an alternative to the state of the art which overcomes the shortcomings found therein, providing a heat exchanger for gases which offers the possibility of circulation of cooling fluid over the tubes thereof which is better and more uniform than that made possible by the exchangers in the state of the art.

### Description of the invention

The disadvantages mentioned are overcome with the heat exchanger for gases according to the present invention, which also has other advantages that are described below. In accordance with the object mentioned, the present invention relates to a heat exchanger for gases, in particular for exhaust gases from an engine according to claim 1, which comprises, in a manner which is in itself known:
- a tube bundle intended for the circulation of exhaust gases;
- a housing which houses within it said tube bundle, extending longitudinally, and which comprises:
   - an end for the entry of gases and an end for the exit of gases to which are attached corresponding supporting plates, to which the ends of the tubes in said tube bundle are attached in such a way that the tubes communicate with the exterior of the housing; and
   - an inlet for cooling fluid and an outlet for cooling fluid to cause a cooling fluid to circulate through the interior of the housing in contact with the tube bundle in order to exchange heat with the exhaust gases circulating within the tubes;
- a longitudinal deflector located within the housing between the tube bundle and the inlet for cooling fluid which is arranged in such a way as to direct the flow of cooling fluid entering through said cooling fluid inlet to said end for the entry of gases;
in which said tube bundle is located within the housing excentrically with respect to the longitudinal central geometrical axis of the housing, thus making it possible for a free space or volume to exist between part of the tube bundle and part of the inner wall of the housing, generally opposite the inlet for cooling fluid, so as not to block the inlet and/or circulation of the latter within the housing.

Unlike the heat exchangers for gases known in the state of the art, the one proposed by the present invention further comprises the features according to claim 1, wherein a first portion of the outer perimeter of the tube bundle, which substantially includes all of the outer perimeter less a second portion thereof which is opposite the longitudinal deflector, is located adjacent to and geometrically matches the inner perimeter of the housing in order to prevent the formation of channels for the passage of cooling fluid between the tubes defining said first portion of the outer perimeter of the tube bundle and the housing (that is to say, undesired channels).

According to the invention, the intermediate space between the inner perimeter of the housing and the first portion of the outer perimeter of the tube bundle is substantially constant for all the first portion of the outer perimeter of the tube bundle.

According to the invention, the intermediate space is of a size smaller than or equal to 3 mm, preferably smaller than or equal to 2 mm in a dimension transverse to any transverse cross-section of the housing.

According to one embodiment, each of the supporting plates comprises corresponding through openings for insertion of corresponding ends of the tubes of the tube bundle in the openings mentioned, where the through openings in each of the supporting plates are distributed over the corresponding supporting plate excentrically with respect to its geometrical center.

According to a variant embodiment of the previous embodiment, the openings of the plurality of through openings in one of the supporting plates are aligned with those in the other supporting plate in such a way that each tube in the tube bundle is inserted into and fixed by means of their two ends to two corresponding through openings which are aligned with each other on the two supporting plates.

According to one embodiment, a first end of the longitudinal deflector is at least in contact with the supporting plate attached to the end for the exit of gases and the longitudinal deflector extends longitudinally within the housing without reaching the supporting plate attached to the end for the entry of gases. In this way a window for coolant is defined between a second end of the longitudinal deflector opposite to the first end and the supporting plate attached to the end for the entry of gases, for cooling fluid directed from the inlet for cooling fluid to pass therethrough. According to one embodiment the longitudinal deflector comprises a through purge opening to prevent air and/or steam from being retained within the space present between the longitudinal deflector and the housing. According to one variant of the previous embodiment the through purge opening is located adjacent to the end for the exit of gases and also adjacent to an area of the housing which is intended to be an upper area when the heat exchanger is fitted to a vehicle.

According to one embodiment the tubes of the tube bundle are distributed symmetrically with respect to at least one plane of symmetry which crosses the tube bundle longitudinally. As a variant of said embodiment the tubes of the tube bundle are also distributed symmetrically with respect to another plane of symmetry at right angles to said at least one plane of symmetry.

In one embodiment the tubes of the tube bundle are distributed asymmetrically with respect to at least one plane which crosses the tube bundle longitudinally.

According to the invention, the housing of the heat exchanger is in the shape of a hollow cylinder. As examples not within the scope of the invention, the housing of the heat exchanger could also be in the shape of a hollow rectangular prism or in the shape of a hollow square prism, or any other form of hollow prism.

According to the invention, the tubes of the tube bundle are distributed so as to form two or more rows.

According to the invention, the two or more rows of tubes follow respective curved trajectories between first and second ends thereof, and the tube bundle further comprises at least two additional tubes, each of which is located adjacent to the first or second ends of the at least two rows of tubes.

According to one implementation of said variant, at least one portion of the longitudinal deflector is adjacent to one of the two or more rows of tubes and also follows a curved trajectory.

According to one version of said implementation some or all of said curved trajectories constitute respective sections of concentric circumferences.

### Brief description of the figures

For a better understanding of what has been described, there are attached a number of drawings in which practical cases of different embodiments are illustrated diagrammatically and only by way of a non-limiting example.
Figure 1 is a diagrammatical view of a heat exchanger according to the state of the art in order to illustrate the configuration described in the section on the state of the art brought about due to factor a), in which it will be seen how the circulation of cooling fluid within the interior of the body of the exchanger away from the inlet and outlet for cooling fluid causes the previously mentioned poorly cooled regions RB to be produced.
Figure 2 is a diagrammatical view in cross-section of the housing of a heat exchanger according to the state of the art in order to illustrate the configuration described in the section on the state of the art brought about due to factor b), in which the undesired channels Ci for the flow of cooling fluid produced between the outer perimeter of the tube bundle and the inner wall of the housing will be seen.
Figure 3 is a diagrammatical view in cross-section of the heat exchanger according to the present invention in an embodiment in which it comprises a housing in the shape of a hollow cylinder, in which the excentric distribution of the tube bundle (represented diagrammatically) will be seen, as well as the fact that a first portion of the outer perimeter of the tube bundle is shaped to the inner perimeter of the housing to prevent giving rise to undesired channels for the flow of cooling fluid.
Figure 4 is a diagrammatical view in cross-section of an example of a heat exchanger not within the scope of the invention, which comprises a housing in the shape of a hollow rectangular prism, in which the excentric distribution of the tube bundle and the fact that a first portion of the outer perimeter of the tube bundle is shaped to the inner perimeter of the housing will also be seen.
Figure 5 is two diagrammatical views in cross-section, a transverse cross-section and a longitudinal cross-section, of the heat exchanger according to the present invention, in an embodiment in which it comprises a housing in the shape of a hollow cylinder.
Figure 6 is two diagrammatical views in cross-section, a transverse cross-section and a longitudinal cross-section, of an example of a heat exchanger not within the scope of the invention, which comprises a housing having the shape of a hollow rectangular prism.
Figure 7 is a perspective view of the heat exchanger for gases proposed according to the present invention in an embodiment in which this includes a tubular housing.
Figure 8a is a perspective view of another example of a heat exchanger for gases not within the scope of the invention, which differs from that in Figure 7 mainly in that the housing is in the shape of a hollow rectangular prism.
Figure 8b is a perspective view of the same heat exchanger illustrated in Figure 8a, but without one of the supporting plates, so that the elements located within the housing, especially the longitudinal deflector, can be seen.

### Description of a number of embodiments

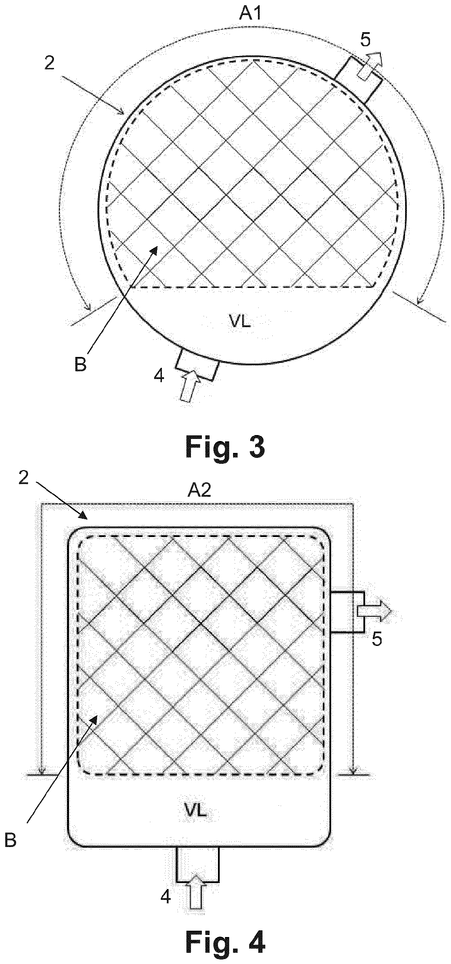

A number of embodiments of the present invention are described below with reference to Figures 3 to 8b.

In Figures 3, 4, 5 and 6 tube bundle B is illustrated diagrammatically by means of hatched lines bounded by a dashed line, which does not represent any particular form of the tubes of the tube bundle, merely representing an area within which the tube bundle is located.

As illustrated in Figure 3, the present invention provides a heat exchanger for gases, such as for example exhaust gases from an engine. The heat exchanger for gases which is the subject matter of the invention comprises a tube bundle B intended for the circulation of exhaust gases and a housing 2 which houses within it a tube bundle B, extending longitudinally within it.

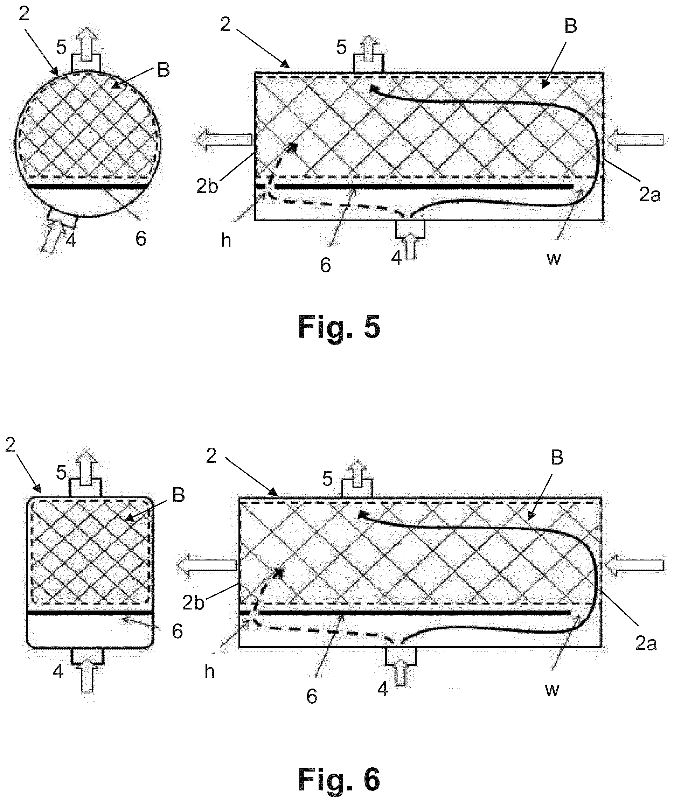

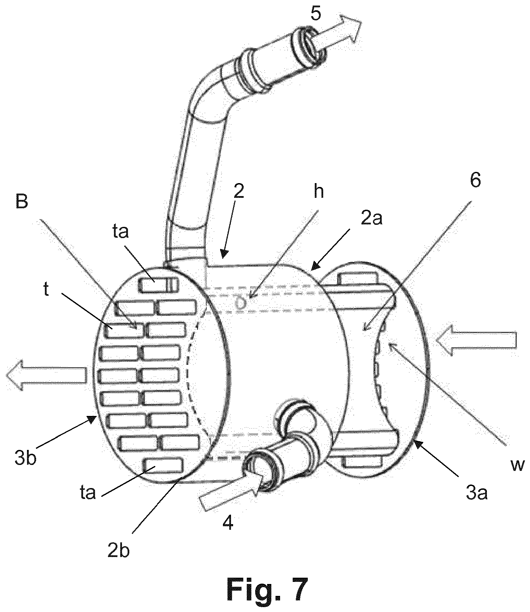

As will be seen in Figures 5 to 8b, housing 2 of the heat exchanger for gases according to the present invention comprises an end 2a for the entry of gases and an end 2b for the exit of gases, the exhaust gases circulating between ends 2a and 2b in the direction illustrated by horizontal arrow lines in the right-hand views in Figures 5 and 6 and in Figure 7.

At end 2a for the entry and 2b for the exit of gases there are attached respective supporting plates 3a, 3b, to which the ends of tubes t (illustrated in Figures 7 to 8b) of tube bundle B are attached in such a way that tubes t communicate with the exterior of housing 2. Said housing 2 also comprises an inlet 4 for cooling fluid and an outlet 5 for cooling fluid so as to cause a cooling fluid to circulate across the interior of housing 2 in contact with tube bundle B (in the direction illustrated by arrows between inlet 4 and outlet 5 in Figures 3, 4 and 7 and in the right-hand views in Figures 5 and 6) in order to exchange heat with the exhaust gases circulating within tubes t.

As will be seen in Figures 3 to 8b, previously mentioned tube bundle B is placed within said housing 2 excentrically with respect to the longitudinal central geometric axis of housing 2 in such a way as to define a free volume VL (see Figures 3 and 4) between part of the tube bundle and part of the inner wall of the housing opposite inlet 4 for cooling fluid, so as not to block the inlet and circulation of the latter within housing 2.

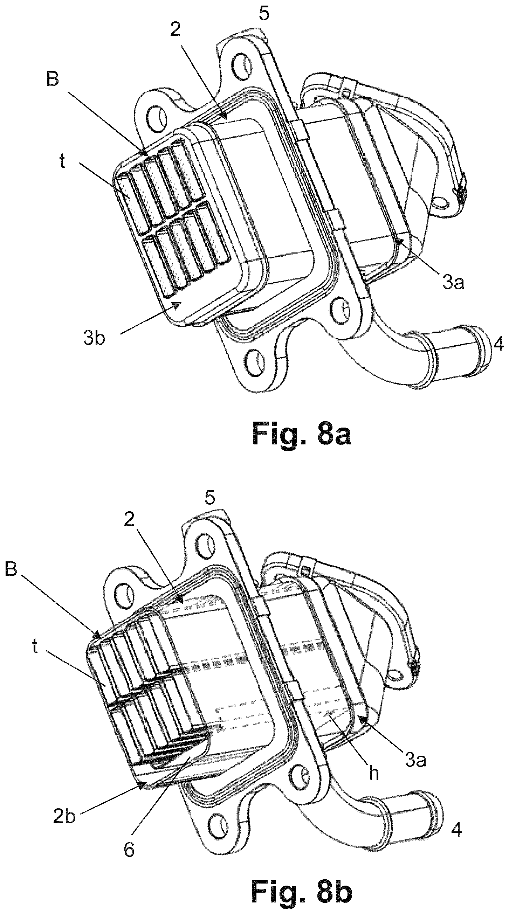

Again as illustrated in Figures 7 and 8a, it will be seen that each of supporting plates 3a, 3b comprises respective through openings for respective ends of tubes t of tube bundle B to be inserted therein (nested within these, advantageously in a leaktight manner), where the through openings in each of supporting plates 3a, 3b are distributed in corresponding supporting plates 3a, 3b in an excentric manner with respect to their geometrical centers.

Figure 8a shows how the openings for the plurality of through openings in one of supporting plates 3a are aligned with those of the other supporting plate 3b in such a way that each tube t in tube bundle B is inserted and fixed at its two ends into two corresponding through openings which are in alignment and belong to the two supporting plates 3a, 3b.

In a preferred embodiment and as illustrated in Figures 5, 6, 7 and 8b the heat exchanger for gases further comprises a longitudinal deflector 6 located within housing 2 between tube bundle B and the inlet 4 for cooling fluid which is designed to direct the entering flow of cooling fluid through inlet 4 for cooling fluid to end 2a for the entry of gases.

Again as illustrated in Figures 5 and 6, it will be seen that a first end of longitudinal deflector 6 is at least in contact with (and optionally welded to) supporting plate 3b attached to end 2b for the exit of gases and extends longitudinally within housing 2 without reaching supporting plate 3a attached to end 2a for the entry of gases, in such a way as to define a window for coolant W between a second end of longitudinal deflector 6 opposite the first end and supporting plate 3a attached to end 2a for the entry of gases, so that cooling fluid directed from cooling fluid inlet 4 may pass along longitudinal deflector 6, thus ensuring an adequate circulation of cooling fluid at the end where the gas is hottest, that is to say at end 2a for the entry of gases.

With regard to the dimensions of said window for coolant W, in general these depend on the flow of cooling fluid, in order to optimize the circulation of the latter and lower pressure in the exchanger.

In one embodiment, if the flow of cooling fluid is:
- equal to or less than 800 l/h, the dimensions of window W will be as follows: 5 mm ≤ Dw < 10 mm;
- above 800 l/h, the dimensions of window W will be as follows: 10 mm ≤ Dw < 15 mm.

Where Dw represents the width of window W, that is to say the distance between the second end of longitudinal deflector 6 and supporting plate 3a. As regards the height of window W, this is determined by the dimensions of longitudinal deflector 6.

As illustrated in Figures 5, 6, 7 and 8b, longitudinal deflector 6 optionally comprises a through purge opening h) to prevent air/steam from being retained within the space present between longitudinal deflector 6 and housing 2. Preferably, as illustrated in the figures mentioned, through purge opening h is located adjacent to end 2b for the exit of gases and also adjacent to an area of housing 2 which is intended to be an upper area when the heat exchanger is fitted to a vehicle.

As regards the dimensions of purge opening h, preferably the diameter thereof is selected in such a way that the total area of purge opening h is less than 10% of the dimensions of window W.

As will be seen in Figures 3 and 4, a first portion of the outer perimeter of tube bundle B is located adjacent to and geometrically matches the inner perimeter of housing 2 to prevent the formation of channels for the undesired passage of cooling fluid between tubes t defining the first portion of the outer perimeter of tube bundle B and housing 2.

The heat exchanger according to the present invention comprises a longitudinal deflector 6, as a result of which the first portion of the outer perimeter of tube bundle B includes all the outer perimeter less a second portion thereof which is opposite said longitudinal deflector 6 as illustrated in Figures 3, 4, 5 and 6 in such a way that the previously mentioned free volume VL (see Figures 3 and 4) is defined between longitudinal deflector 6 and the part of housing 2 which includes inlet 4 for cooling fluid.

In the embodiments illustrated in Figures 3, 5 and 7 and in the examples illustrated in Figures 4, 6, 8a and 8b, tubes t of tube bundle B are distributed symmetrically with respect to at least one plane of symmetry which crosses tube bundle B longitudinally.

Likewise, in the examples in Figures 4, 6, 8a and 8b, tubes t of tube bundle B are also distributed symmetrically with respect to another plane of symmetry at right angles to the plane of symmetry mentioned. Conversely, in the embodiment illustrated in Figures 3, 5 and 7, tubes t of tube bundle B are distributed symmetrically only with respect to the mentioned plane of symmetry which crosses tube bundle B longitudinally (horizontal plane in the position illustrated in Figure 7) and asymmetrically with respect to a plane which crosses tube bundle B longitudinally (vertical plane in the position illustrated in Figure 7).

In the embodiment in Figures 3, 5 and 7 housing 2 of the heat exchanger is in the shape of a hollow cylinder. Alternatively, in the example illustrated in Figures 4, 6, 8a and 8b housing 2 is in the shape of a hollow rectangular prism.

It will be seen that in the embodiment illustrated in Figure 7, and in the examples illustrated in Figures 8a and 8b tubes t of tube bundle B are distributed forming two rows.

In particular, in the embodiment in Figure 7 the two rows of tubes follow respective curved trajectories between first and second ends thereof, and tube bundle B further comprises two additional tubes ta, each one of which is located adjacent to the first or second ends of the two rows of tubes t in such a way as to further fill the space between the tubes and the inner perimeter of housing 2.

Although in the embodiment illustrated in Figure 7, and in the examples illustrated in Figures 8a and 8b all tubes t (including additional tubes ta) have a rectangular transverse cross-section of the same dimensions, in other embodiments, not illustrated, the transverse cross-sections have a shape other than that illustrated (such as circular or oval), which is not necessarily the same or of the same dimensions for all the tubes.

For example, additional tubes ta may have a transverse dimension which is larger than those of the remainder of tubes t and/or a different shape (e.g. oval), all with the object of adjusting even more to the inner perimeter of housing 2 to thus further reduce the intermediate space between the two.

It will also be seen in Figure 7, in the embodiment illustrated therein, how a portion (almost all) of longitudinal deflector 6 is adjacent to one of the two rows of tubes t and also follows a curved trajectory. With reference to Figures 3 and 4, those associated with the dashed double arrow lines illustrated therein and indicated as A1 and A2 indicate possible transverse locations where it is possible to locate outlet 5 for cooling fluid, which depends on the shape of housing 2.

In particular, when housing 2 is cylindrical (Figure 3), inlet 4 and outlet 5 for cooling fluid may take up any relative position between them, provided that inlet 4 is opposite free volume VL and outlet 5 is opposite a volume occupied by tubes of tube bundle B.

Conversely, when housing 2 is a housing in the shape of a square or rectangular prism (Figure 4), inlet 4 and outlet 5 for cooling fluid may be located in adjacent or opposite walls of housing 2, but not in the same wall, also provided that inlet 4 is opposite free volume VL and outlet 5 is opposite a volume occupied by tubes of tube bundle B.

Although reference has been made to a specific embodiment of the invention, it is obvious to a person skilled in the art that the heat exchanger for gases described is susceptible of many variations and modifications, and that all the details mentioned may be substituted by others which are technically equivalent without going beyond the scope of protection defined by the appended claims.

## Claims

1. A heat exchanger for gases, in particular for exhaust gases from an engine, which comprises:
- a tube bundle (B) intended for the circulation of exhaust gases;
- a housing (2) which houses within it said tube bundle (B), extending longitudinally, and which comprises:
- an end (2a) for the entry of gases and an end (2b) for the exit of gases to which are attached corresponding supporting plates (3a, 3b), to which the ends of the tubes (t) in said tube bundle (B) are attached in such a way that the tubes (t) communicate with the exterior of the housing (2); and
- an inlet (4) for cooling fluid and an outlet (5) for cooling fluid to cause a cooling fluid to circulate through the interior of the housing (2) in contact with the tube bundle (B) in order to exchange heat with the exhaust gases circulating within the tubes (t);
- a longitudinal deflector (6) located within the housing (2) between the tube bundle (B) and the inlet (4) for cooling fluid which is arranged in such a way as to direct the flow of cooling fluid entering through said cooling fluid inlet (4) to said end (2a) for the entry of gases;
wherein said tube bundle (B) is located within said housing (2) excentrically with respect to the longitudinal central geometrical axis of the housing (2),
wherein a first portion of the outer perimeter of said tube bundle (B), which substantially includes all of the outer perimeter less a second portion thereof which is opposite said longitudinal deflector (6), is located adjacent to and geometrically matches the inner perimeter of the housing (2) in order to prevent the formation of channels for the passage of cooling fluid between the tubes (t) defining said first portion of the outer perimeter of the tube bundle (B) and the housing (2), wherein the intermediate space between the inner perimeter of the housing (2) and the first portion of the outer perimeter of the tube bundle (B) is substantially constant for all the first portion of the outer perimeter of the tube bundle (B), the heat exchanger being **characterized in that**
said intermediate space is of a size smaller than or equal to 3 mm in a dimension transverse to any transverse cross-section of the housing (2), wherein said housing (2) is in the shape of a hollow cylinder, wherein the tubes (t) of the tube bundle (B) are distributed to form at least two rows and wherein said two rows of tubes (t) follow respective curved trajectories between first and second ends thereof, and **in that** the tube bundle (B) further comprises at least two additional tubes (ta), each of which is located adjacent to the first or second ends of the at least two rows of tubes (t).

2. The exchanger as claimed in claim 1, wherein the intermediate space is of a size smaller than or equal to 2 mm in said dimension transverse to any transverse cross-section of the housing (2).

3. The heat exchanger as claimed in any one of the preceding claims, wherein a first end of said longitudinal deflector (6) is at least in contact with the supporting plate (3b) attached to the end (2b) for the exit of gases and extends longitudinally within the housing (2) without reaching the supporting plate (3a) attached to the end (2a) for the entry of gases in such a way as to define a window for coolant (W) between a second end of the longitudinal deflector (6) opposite said first end and supporting plate (3a) attached to the end (2a) for the entry of gases, for cooling fluid directed from the inlet (4) for cooling fluid to pass therethrough.

4. The heat exchanger as claimed in any one of the preceding claims, wherein said longitudinal deflector (6) comprises a through purge opening (h) to prevent air/steam from being retained within the space present between the longitudinal deflector (6) and the housing (2) .

5. The heat exchanger as claimed in claim 4, wherein said through purge opening (h) is located adjacent to the end (2b) for the exit of gases and is also adjacent to an area of the housing (2) which is intended to be an upper area when the heat exchanger is fitted to a vehicle.

6. The heat exchanger as claimed in any one of the preceding claims, wherein the tubes (t) of the tube bundle (B) are distributed symmetrically with respect to at least one plane of symmetry which crosses the tube bundle (B) longitudinally.

7. The heat exchanger as claimed in claim 6, wherein the tubes (t) of the tube bundle (B) are also distributed symmetrically with respect to another plane of symmetry at right angles to said at least one plane of symmetry.

8. The exchanger as claimed in claim 1, wherein at least one portion of the longitudinal deflector (6) is adjacent to one of the at least two rows of tubes (t) and also follows a curved trajectory.

9. The exchanger as claimed in claim 8, wherein at least some of said curved trajectories constitute respective sections of concentric circumferences.

## Patentansprüche

1. Wärmetauscher für Gase, insbesondere für Abgase eines Motors, umfassend:
- ein Rohrbündel (B), das für die Zirkulation von Abgasen vorgesehen ist;
- ein Gehäuse (2), in dem das Rohrbündel (B) untergebracht ist, das sich in Längsrichtung erstreckt, Folgendes umfassend:
- ein Ende (2a) für den Eintritt von Gasen und ein Ende (2b) für den Austritt von Gasen, an denen jeweils Stützplatten (3a, 3b) angebracht sind, an denen die Enden der Rohre (t) in dem Rohrbündel (B) so angebracht sind, dass die Rohre (t) mit der Außenseite des Gehäuses (2) kommunizieren; und
- einen Einlass (4) für Kühlfluid und einen Auslass (5) für Kühlfluid, um zu bewirken, dass ein Kühlfluid durch das Innere des Gehäuses (2) in Kontakt mit dem Rohrbündel (B) zirkuliert, um mit den innerhalb der Rohre (t) zirkulierenden Abgasen Wärme auszutauschen;
- einen Längsdeflektor (6), der innerhalb des Gehäuses (2) zwischen dem Rohrbündel (B) und dem Einlass (4) für Kühlfluid angeordnet ist, welcher so angeordnet ist, dass er den Strom von Kühlfluid, der durch Kühlfluideinlass (4) eintritt, zum Ende (2a) für den Eintritt von Gasen leitet;
wobei das Rohrbündel (B) innerhalb des Gehäuses (2) in Bezug auf die geometrische Längsmittelachse des Gehäuses (2) exzentrisch angeordnet ist, wobei ein erster Abschnitt des Außenumfangs des Rohrbündels (B), der im Wesentlichen den gesamten Außenumfang abzüglich eines zweiten Abschnitts davon umfasst, der dem Längsdeflektor (6) gegenüberliegt, angrenzend an den Innenumfang des Gehäuses (2) angeordnet ist und geometrisch mit diesem übereinstimmt, um die Ausbildung von Kanälen für den Durchtritt von Kühlfluid zwischen den Rohren (t), die den ersten Abschnitt des Außenumfangs des Rohrbündels (B) und des Gehäuses (2) definieren, zu verhindern, wobei der Zwischenraum zwischen dem Innenumfang des Gehäuses (2) und dem ersten Abschnitt des Außenumfangs des Rohrbündels (B) für den gesamten ersten Abschnitt des Außenumfangs des Rohrbündels (B) im Wesentlichen konstant ist, wobei der Wärmetauscher **dadurch gekennzeichnet ist dass** der Zwischenraum eine Größe von höchstens 3 mm in einer Abmessung quer zu einem beliebigen Querschnitt des Gehäuses (2) aufweist, wobei das Gehäuse (2) in der Form eines Hohlzylinders vorliegt, wobei die Rohre (t) des Rohrbündels (B) verteilt sind, um mindestens zwei Reihen auszubilden, und wobei die zwei Reihen von Rohren (t) jeweiligen gekrümmten Bahnen zwischen ihren ersten und zweiten Enden folgen, und dadurch, dass das Rohrbündel (B) ferner mindestens zwei zusätzliche Rohre (ta) umfasst, von denen jedes benachbart zu dem ersten dem zweiten Ende der mindestens zwei Reihen von Rohren (t) angeordnet ist.

2. Tauscher nach Anspruch 1, wobei der Zwischenraum eine Größe von höchstens 2 mm in der Abmessung quer zu einem beliebigen Querschnitt des Gehäuses (2) aufweist.

3. Wärmetauscher nach einem der vorhergehenden Ansprüche, wobei ein erstes Ende des Längsdeflektors (6) mindestens in Kontakt mit der Stützplatte (3b) steht, die an dem Ende (2b) für den Austritt von Gasen angebracht ist, und sich in Längsrichtung innerhalb des Gehäuses (2) erstreckt, ohne die am Ende (2a) für den Eintritt von Gasen angebrachte Stützplatte (3a) zu erreichen, sodass ein Fenster für Kühlmittel (W) zwischen einem zweiten Ende des Längsdeflektors (6) gegenüber dem ersten Ende und einer Stützplatte (3a), die an dem Ende (2a) für den Eintritt von Gasen angebracht ist, definiert wird, damit Kühlfluid, das von dem Einlass (4) für Kühlfluid dorthin geleitet wird, hindurchtritt.

4. Wärmetauscher nach einem der vorhergehenden Ansprüche, wobei der Längsdeflektor (6) eine Durchgangsspülöffnung (h) umfasst, um zu verhindern, dass Luft/Dampf in dem zwischen dem Längsdeflektor (6) und dem Gehäuse (2) vorliegenden Raum zurückgehalten wird.

5. Wärmetauscher nach Anspruch 4, wobei die Durchgangsspülöffnung (h) angrenzend an das Ende (2b) für den Austritt von Gasen und auch angrenzend an einen Bereich des Gehäuses (2) angeordnet ist, der dazu bestimmt ist, ein oberer Bereich zu sein, wenn der Wärmetauscher an einem Fahrzeug montiert ist.

6. Wärmetauscher nach einem der vorhergehenden Ansprüche, wobei die Rohre (t) des Rohrbündels (B) bezüglich mindestens einer das Rohrbündel (B) in Längsrichtung kreuzenden Symmetrieebene symmetrisch verteilt sind.

7. Wärmetauscher nach Anspruch 6, wobei die Rohre (t) des Rohrbündels (B) auch bezüglich einer anderen Symmetrieebene rechtwinklig zu der mindestens einen Symmetrieebene symmetrisch verteilt sind.

8. Tauscher nach Anspruch 1, **dadurch gekennzeichnet, dass** mindestens ein Abschnitt des Längsdeflektors (6) an eine der zumindest zwei Reihen von Rohren (t) angrenzt und ebenfalls einer gekrümmten Bahn folgt.

9. Tauscher nach Anspruch 8, wobei mindestens manche der gekrümmten Bahnen jeweils Abschnitte konzentrischer Umfänge ausbilden.

## Revendications

1. Échangeur de chaleur pour gaz, en particulier pour gaz d'échappement provenant d'un moteur, qui comprend :
- un faisceau de tubes (B) prévu pour la circulation de gaz d'échappement ;
- un logement (2) qui loge, à l'intérieur de celui-ci, ledit faisceau de tubes (B), s'étendant longitudinalement, et qui comprend :
- une extrémité (2a) pour l'introduction de gaz et une extrémité (2b) pour l'évacuation de gaz, auxquelles sont attachées des plaques de support correspondantes (3a, 3b), auxquelles les extrémités des tubes (t) dans ledit faisceau de tubes (B) sont attachées de manière telle que les tubes (t) communiquent avec l'extérieur du logement (2) ; et
- une entrée (4) pour fluide de refroidissement et une sortie (5) pour fluide de refroidissement pour faire en sorte qu'un fluide de refroidissement circule à travers l'intérieur du logement (2) en contact avec le faisceau de tubes (B) afin d'échanger de la chaleur avec les gaz d'échappement circulant à l'intérieur des tubes (t) ;
- un déflecteur longitudinal (6) situé à l'intérieur du logement (2) entre le faisceau de tubes (B) et l'entrée (4) pour fluide de refroidissement, qui est agencé de manière telle à diriger l'écoulement de fluide de refroidissement, entrant à travers ladite entrée de fluide de refroidissement (4), vers ladite extrémité (2a) pour l'introduction de gaz ;
dans lequel ledit faisceau de tubes (B) est situé à l'intérieur dudit logement (2) excentriquement par rapport à l'axe géométrique central longitudinal du logement (2),
dans lequel
une première partie du périmètre extérieur dudit faisceau de tubes (B), qui inclut sensiblement la totalité du périmètre extérieur moins une seconde partie de celui-ci qui est en face dudit déflecteur longitudinal (6), est située de façon adjacente, et correspond géométriquement, au périmètre intérieur du logement (2) afin d'empêcher la formation de canaux pour le passage de fluide de refroidissement entre les tubes (t) définissant ladite première partie du périmètre extérieur du faisceau de tubes (B) et le logement (2), dans lequel l'espace intermédiaire entre le périmètre intérieur du logement (2) et la première partie du périmètre extérieur du faisceau de tubes (B) est sensiblement constant pour toute la première partie du périmètre extérieur du faisceau de tubes (B),
l'échangeur de chaleur étant **caractérisé en ce que**
ledit espace intermédiaire est d'une taille inférieure ou égale à 3 mm dans une dimension transversale à une quelconque section transversale du logement (2), dans lequel ledit logement (2) est sous la forme d'un cylindre creux, dans lequel les tubes (t) du faisceau de tubes (B) sont distribués pour former au moins deux rangées et dans lequel lesdites deux rangées de tubes (t) suivent des trajectoires incurvées respectives entre des première et seconde extrémités de celles-ci, et **en ce que** le faisceau de tubes (B) comprend en outre au moins deux tubes supplémentaires (ta), dont chacun est situé de façon adjacente à la première ou seconde extrémité des au moins deux rangées de tubes (t) .

2. Échangeur selon la revendication 1, dans lequel l'espace intermédiaire est d'une taille inférieure ou égale à 2 mm dans ladite dimension transversale à une quelconque section transversale du logement (2).

3. Échangeur de chaleur selon l'une quelconque des revendications précédentes, dans lequel une première extrémité dudit déflecteur longitudinal (6) est au moins en contact avec la plaque de support (3b) attachée à l'extrémité (2b) pour l'évacuation de gaz et s'étend longitudinalement à l'intérieur du logement (2) sans atteindre la plaque de support (3a) attachée à l'extrémité (2a) pour l'introduction de gaz de manière telle à définir une fenêtre pour frigorigène (W) entre une seconde extrémité du déflecteur longitudinal (6) en face de ladite première extrémité et la plaque de support (3a) attachée à l'extrémité (2a) pour l'introduction de gaz, pour un fluide de refroidissement dirigé depuis l'entrée (4) pour que le fluide de refroidissement passe à travers celle-ci.

4. Échangeur de chaleur selon l'une quelconque des revendications précédentes, dans lequel ledit déflecteur longitudinal (6) comprend une ouverture de passage de purge (h) pour empêcher de l'air/de la vapeur d'être retenue à l'intérieur de l'espace présent entre le déflecteur longitudinal (6) et le logement (2).

5. Échangeur de chaleur selon la revendication 4, dans lequel ladite ouverture de passage de purge (h) est située de façon adjacente à l'extrémité (2b) pour l'évacuation de gaz et est également adjacente à une zone du logement (2) qui est prévue pour être une zone supérieure lorsque l'échangeur de chaleur est installé sur un véhicule.

6. Échangeur de chaleur selon l'une quelconque des revendications précédentes, dans lequel les tubes (t) du faisceau de tubes (B) sont distribués symétriquement par rapport à au moins un plan de symétrie qui croise le faisceau de tubes (B) longitudinalement.

7. Échangeur de chaleur selon la revendication 6, dans lequel les tubes (t) du faisceau de tubes (B) sont également distribués symétriquement par rapport à un autre plan de symétrie à angle droit par rapport audit au moins un plan de symétrie.

8. Échangeur selon la revendication 1, dans lequel au moins une partie du déflecteur longitudinal (6) est adjacente à une des au moins deux rangées de tubes (t) et suit également une trajectoire incurvée.

9. Échangeur selon la revendication 8, dans lequel au moins certaines desdites trajectoires incurvées constituent des sections respectives de circonférences concentriques.
